# EUROPEAN PATENT SPECIFICATION

(11) **EP 0 320 145 B1**
(45) Date of publication and mention of the grant of the patent: **17.05.1995**
(21) Application number: 88311079.3
(22) Date of filing: 23.11.1988
(51) Int. Cl.: C08F 4/64, C08F 10/00

(54) **Process for the production of olefin polymerisation catalysts**
Verfahren zur Herstellung von Olefinpolymerisationskatalysatoren
Procédé pour la préparation des catalyseurs de polymérisation d'oléfines

(30) Priority: 24.11.1987 US 124643; 24.11.1987 US 124645; 11.07.1988 US 217575; 11.07.1988 US 217576
(43) Date of publication of application: 14.06.1989
(73) Proprietor: SHELL OIL COMPANY, Houston Texas 77002 (US)
(72) Inventor: Job, Robert Charles, Houston Texas 77077 (US)
(74) Representative: Cresswell, Thomas Anthony

(56) References cited:
- EP-A- 0 019 330
- EP-A- 0 022 675
- EP-A- 0 102 503
- US-A- 4 496 660

## Description

The present invention relates to the preparation of olefin polymerization catalysts and to a process for the polymerization of olefins using such catalysts.

There are numerous prior art proposals to provide olefin polymerization catalysts obtained by combining a component comprising magnesium halide and a titanium halide with an activating organoaluminum compound. The polymerization activity and the stereospecific performance of such compositions may be improved by incorporating an electron donor (Lewis base) into the component comprising titanium, into the organoaluminum activating component or into both these components. The catalyst compositions of this type which have been disclosed in the prior art are able to produce olefin polymers in an attractively high yield, calculated as g polymer/g titanium, and also with the required high level of stereoregular polymeric material.

US-A-4 496 660 describes the preparation of a catalyst component which contains the product obtained by reacting a halide such as TiCl₄ with the reaction product of an alkyl magnesium compound and an oxygen-containing and/or nitrogen containing compound. Such catalyst components are used with an activator or cocatalyst such as triethylaluminium in the polymerisation of α-olefins. EP-A-0 019 330 discloses an olefin polymerisation catalyst composition comprising (i) the reaction product of an organaluminium compound and an electron donor, and (ii) a compound obtained by reacting a magnesium alkyl, aryl, alkoxy or aryloxy compound with a halide of tetravalent titanium. EP-A-0 192 503 relates to the preparation of an α-olefin polymerisation catalyst, whereby the reaction product of a organomagnesium compound and a halogenating agent is treated with a mixture of a halogenated silicon compound and a titanium compound. EP-A-0 022 675 describes the preparation of olefin polymers using a catalyst composed of (i) a solid titanium component containing Mg, Ti, halogen and an electron donor, and (ii) an organometallic compound of a Group I to III metal.

The manufacture of magnesium halide supported catalysts for the polymerization of olefins by halogenating a magnesium alkoxide is also described in, for example, US-A-4,400,302 and US-A-4,414,132. Since the morphology of the polymer is generally controlled by the morphology of the catalyst, much effort has been expended in attempting to control the morphology of such catalysts. Magnesium alkoxides have been formed by methathesis and/or have been all built to obtain the desired particle size, distribution and bulk density. These methods are costly and time consuming. Thus, there is a need for a simplified method for producing such catalysts but which still allows adequate morphology control.

The present invention provides a simplified means for morphology control for magnesium alkoxide catalyst particles. The magnesium alkoxide is formed in solution from a chemical reaction between a mixture of at least one alkyl or aryl magnesium compound and an aldehyde or ketone. This gives rise to a magnesium alkoxide product which is extremely soluble in organic solvents because of entropic effects. Soluble magnesium alkoxide catalyst components comprising a complex of a magnesium alkoxide and a compound of another metal, such as aluminum, zinc or boron, are described in US-A-4,496,660; US-A-4,496,661 and US-A-4,526,943. The present invention has the advantage that it provides a process whereby a soluble magnesium alkoxide catalyst component may be obtained without the addition of another metal compound.

The present invention provides a process for preparing a catalyst component suitable for use in the polymerization of alpha olefins, comprising no inert support material and having a narrow particle size distribution, which comprises:
1) mixing at least one alkyl or aryl magnesium compound with an aldehyde or ketone in the presence of a solvent, the aldehyde or ketone being a branched or aromatic aldehyde when only one alkyl or aryl magnesium compound is used and up to 70% of the said branched or aromatic aldehyde being optionally replaced by linear aldehydes;
2) dissolving, dispersing or suspending a halide of tetravalent titanium in the resulting solution;
3) recovering the resulting precipitate; and
4) contacting the precipitate with a halide of tetravalent titanium.

An electron donor and/or a halohydrocarbon may also be added to the solution along with the halide of tetravalent titanium.

The invention further provides a polymerization catalyst comprising a catalyst component produced by the above process as well as a process for the preparation of an alpha olefin polymer which comprises catalytically polymerizing alpha olefins in the presence of such a polymerization catalyst. The invention also provides an alpha olefin polymer prepared by this polymerization process.

The present invention enables soluble magnesium alkoxides to be prepared which can be used in the production of polymerization catalysts with improved morphology. In many cases, the direct reaction of a magnesium alkyl or aryl and an aldehyde or ketone results in a product which is not soluble. Soluble magnesium alkoxides can, however, be obtained by a suitable choice of reactants from specific groups which together create entropic effects enhancing the solubility of the magnesium alkoxide product.

Suitable magnesium compounds include dialkyl and diaryl magnesium compounds and alkyl aryl magnesium compounds. In such compounds the alkyl groups generally have from 2 to 20 carbon atoms. Examples of such compounds are diethyl magnesium, dibutyl magnesium, di-n-amyl magnesium, dicyclohexyl magnesium, di-isopropyl magnesium, isobutylpropyl magnesium, octylisoamyl magnesium, ethylheptyl magnesium, naphthylphenyl magnesium, cumylphenyl magnesium, diphenyl magnesium, ethylphenyl magnesium and isobutylnaphthyl magnesium.

As discussed above, there must be at least one alkyl or aryl magnesium compound present in the solution in order to obtain entropic effects which enhance the solubility of the aldoxides formed in the solution. Any of the alkyl or aryl magnesium compounds listed above may be mixed together in the process of the present invention. Examples of such mixtures include n-butyl-isobutyl magnesium and dialkyl magnesium containing alkyls from C₂ to C₂₀, particularly C₄ to C₈.

A mixture of at least one alkyl or aryl magnesium compound with an aldehyde or ketone will create the conditions necessary for the formation of soluble magnesium alkoxides provided that, when only one magnesium compound is used, the aldehyde or ketone is a branched or aromatic aldehyde. An example of a suitable branched aldehyde is 2-ethylhexanal and of a suitable aromatic aldhyde is benzaldehyde. It is possible, within the invention, to replace a portion of the branched or aromatic aldehyde by a linear aldehyde. This is desirable because branched and aromatic aldehydes are generally very expensive compared to many linear aldehydes, such as acetaldehyde, butyraldehyde and octylaldehyde. Examples of suitable aldehydes are paraformaldehyde, acetaldehyde, propionaldehyde, butyraldehyde and valeraldehyde. Examples of suitable ketones are acetone and 2-butanone. Linear aldehydes can replace up to at least 70% of the branched or aromatic aldehyde and a magnesium alkoxide solution which is like water will still be obtained.

The solvent which is used in the process of the invention is suitably any non-reactive solvent which will form a homogenous solution and dissolve, disperse or suspend the halide of tetravalent titanium. Examples of suitable solvents are isopentane, isooctane, heptane, chlorobenzene and toluene.

The magnesium compounds are usually reacted with a halide of tetravalent titanium to form a magnesium halide in which the atomic ratio of halogen to magnesium is at least 1.2:1. Better results are obtained when the halogenation proceeds more completely and the atomic ratio of halogen to magnesium is at least 1.5:1. The most preferred reactions are those leading to fully halogenated reaction products, i.e. magnesium dihalides. Such halogenation reactions are suitably effected by employing a molar ratio of magnesium compound to titanium compound from 0.005:1 to 2:1, more suitably from 0.01:1 to 1:1. These halogenation reactions may also proceed in the presence of an electron donor and/or an inert halohydrocarbon diluent or solvent. It is also possible to incorporate an electron donor into the halogenated product.

Suitable halides of tetravalent titanium include aryloxy- or alkoxydi- and -trihalides, such as dihexanoxytitanium dichloride, diethoxytitanium dibromide, isopropoxytitanium triiodide, phenoxytitanium trichloride, and titanium tetrahalides, particularly titanium tetrachloride.

Suitable halohydrocarbons include butyl chloride, phenyl chloride, naphthyl chloride and amyl chloride. Halohydrocarbons which comprise from 1 to 12, preferably less than 9, carbon atoms and at least two halogen atoms are particularly suitable and include dibromomethane, trichloromethane, 1,2-dichloroethane, dichlorofluoroethane, trichloropropane, dichlorodibromodifluorodecane, hexachlorond tetrachloroisooctane. Chlorobenzene is a particularly preferred halohydrocarbon.

The halogenation proceeds until formation of a solid reaction product which may be isolated from the reaction medium by filtration, decantation or another suitable method and subsequently washed with an inert hydrocarbon diluent, such as n-hexane, isooctane or toluene, to remove any unreacted material, including physically adsorbed halohydrocarbon. The presence of the halohydocarbon during halogenation of the magnesium compound confers an increase in polymerization activity on the resulting catalyst composition when compared with the catalyst compositions which are prepared by halogenating magnesium compounds merely with a titanium tetrahalide.

Following halogenation, and precipitation from solution the product is contacted with a halide of tetravalent titanium. This may be, for example, a dialkoxy-titanium dihalide, alkoxy-titanium trihalide, phenoxy-titanium trihalide or titanium tetrahalide. Titanium tetrachloride is particularly suitable. This treatment serves to increase the content of tetravalent titanium in the catalyst component and is generally such that the final atomic ratio of tetravalent titanium to magnesium in the catalyst component is from 0.005:1 to 3:1, for example from 0.02:1 to 1:1. The process of contacting with the halide of tetravalent titanium is generally carried out at a temperature of from 60° to 136°C for 0.1 to 6 hours, optionally in the presence of an inert hydrocarbon diluent. Particularly suitable conditions involve contacting temperatures from 70° to 120°C and contacting periods from 0.5 to 2.5 hours.

After treatment with the halide of tetravalent titanium the catalyst component is generally isolated from the reaction medium and washed to remove unreacted titanium compound. The halide of tetravalent titanium with which the halogenated product is contacted is particularly suitably a chloride.

The organoaluminium compound to be employed as cocatalyst is generally any one of the known activators in olefin polymerization catalyst systems comprising a titanium halide. Examples include aluminum trialkyl compounds, dialkyl aluminum halides and dialkyl aluminum alkoxides. Aluminum trialkyl compounds are particularly suitable, especially those in which each of the alkyl groups has 2 to 6 carbon atoms, such as aluminum triethyl, aluminum tri-n-propyl, aluminum tri-isobutyl, aluminum tri-isopropyl and aluminum dibutyl-n-amyl.

It is possible to include one or more electron donors in the catalyst, either independently or in combination with the organoaluminum compound. This electron donor is commonly known as a selectivity control agent. Electron donors suitable for this purpose include ethers, esters, ketones, phenols, amines, amides, imines, nitriles, phosphines, silanes, phosphites, stilbines, arsines, phosphoramides and alcoholates. Suitable donors are referred to in US-A-4,136,243 (corresponding to GB-A-1,486, 194) and GB-A-1,554,340 (corresponding to DE-A-2,729,126). Esters and organic silicon compounds are particularly suitable donors. Examples of suitable esters are esters of aromatic carboxylic acids, such as ethyl and methyl benzoate, ethyl p-methoxy-benzoate, methyl p-ethoxybenzoate and ethyl p-ethoxy-benzoate. Other suitable esters include ethyl acrylate, methyl methacrylate, ethyl acetate, dimethyl carbonate, dimethyl adipate, dihexyl fumarate, dibutyl maleate, ethylisopropyl oxalate, ethyl p-chlorobenzoate, hexyl p-amino-benzoate, isopropyl naphthenate, n-amyl toluate, ethyl cyclohexanoate and propyl pivalate. Examples of suitable organic silicon compounds include alkoxysilanes and acyloxysilanes of the general formula R¹ₙSi(OR²)₄₋ₙ where n is from 0 to 3, R¹ is a hydrocarbon group or a halogen atom and R² is a hydrocarbon group. Specific examples include trimethylmethoxy silane,triphenylethoxy silane, dimethyldimethoxy silane and phenyltrimethoxy silane. The donor used as selectivity control agent in the catalyst may be the same as, or different from, the donor used for preparing the titanium containing constituent. Suitable electron donors for use in preparing the titanium constituent are ethyl benzoate and isobutyl phthalate. Ethyl p-ethoxy-benzoate, phenethyltrimethoxy silane and diphenyldimethoxy silane are particularly suitable as selectivity control agents in the catalyst.

The electron donor is suitably present in the cocatalyst in a molar ratio to the aluminium compounds of 0.1:1 to 1:1, for example 0.2:1 to 0.5:1. The electron donor optionally contained in the solid component is suitably present in a molar ratio to magnesium of 0.05:1 to 10:1, for example 0.1:1 to 5:1. The solid catalyst components described herein are novel per se and they are also included within this invention. To prepare the final polymerization catalyst composition, components are simply combined, most suitably employing a molar ratio such that the atomic ratio of aluminum to titanium in the final catalyst is from 1:1 to 80:1, generally less than 50:1.

As mentioned above, the present invention provides a process for polymerizing an olefin, employing the novel catalyst compositions. Examples of olefins which may be thus polymerized are ethylene, butylene and propylene. The process is particularly suited to propylene polymerization. The polymerization process is generally carried out by any one of the conventional techniques, such as gas phase polymerization or slurry polymerization using liquid monomer or an inert hydrocarbon diluent as liquid medium. Hydrogen may be used to control the molecular weight of the polymer without detriment to the stereospecific performance of the catalyst compositions. Polymerization may be effected batchwise or continuously with constant or intermittent supply of the novel polymerization catalyst or one of the catalyst components to the polymerisation reactor. The activity and stereospecificity of the novel polymerisation catalyst are so pronounced that there is no need for any catalyst removal or polymer extraction techniques. Total metal residues in the polymer, i.e. the combined aluminium, magnesium and titanium content, can be as low as 200 ppm, even less than 100 ppm as will be shown in the Examples:

The following Examples further illustrate the invention.

### EXAMPLE 1

50 mmol of paraformaldehyde and 60 ml of chlorobenzene were stirred overnight with 25 mmol of a mixed alkyl magnesium solution (available from Ethyl Corporation containing alkyls from C₄ to C₂₀ with the peak in the C₄ to C₈ range). Then 1.8 ml of ethyl benzoate was added to the non-viscous solution and 75 ml of an 80/20 mixture of titanium tetrachloride and chlorobenzene was also added. The temperature was raised to 80°C and the solution was stirred for 30 minutes. The precipitated product was filtered and then washed twice with a 50/50 mixture of titanium tetrachloride and chlorobenzene at 80°C and then was filtered hot and rinsed with six 150 ml portions of isopentane at room temperature. Finally, the product was dried under flowing nitrogen at 40°C. The resulting catalyst component contained 4.08% titanium and 17.43% magnesium. The catalyst component particles came out in a narrow particle size range which carried on to polymer produced using the catalyst component.

### EXAMPLE 2

The procedure of Example 1 was repeated using butyraldehyde instead of paraformaldehyde. The resulting catalyst component contained 2.04% titanium and 17.36% magnesium. The catalyst component particles came out in a narrow particle size range which carried on to polymer.

### COMPARATIVE EXAMPLE

A mixture of linear aldhydes containing 17 mmol acetaldehyde, 17 mmol butyraldehyde and 16 mmol octylaldehyde was mixed in 10 ml of chlorobenzene and then added dropwise to a stirred solution of 25 mmol of dibutyl magnesium in 32.8 ml of heptane plus 40 ml of chlorobenzene over a 20 minute period. The reaction product was not soluble and had the consistency of very crumbly jello. The reaction product was treated with 1.8 ml of ethyl benzoate. 75ml of an 80/20 mixture of titanium tetrachloride and chlorobenzene was also added to the solution. The temperature was raised to 80°C and the solution was stirred for 30 minutes. The precipitated product was filtered and then washed twice with a 50/50 mixture of titanium tetrachloride and chlorobenzene at 80°C and then was filtered hot and rinsed with six 150 ml portions of isopentane at room temperature. Finally, the product was dried under flowing nitrogen at 40°C.

### EXAMPLE 3

The procedures of the Comparative Example were repeated except that the linear aldehydes were replaced by 50 mmol of 2-ethylhexanal (2-ethylhexaldehyde). The reaction product in each case was a pale yellow solution which had the consistency of water. This illustrates that a branched aldehyde creates a soluble magnesium alkoxide while the linear aldehydes of the Comparative Example did not. The catalyst component particles come out in a narrow particle size range which carry on to polymer.

### EXAMPLE 4

The procedure of Example 3 was repeated except that isopentane was used as the solvent in place of chlorobenzene. Again, the intermediate reaction product was a pale yellow solution which had the consistency of water. Thus, the advantages of the present invention were achieved even though isopentane, which is not as good a solvent as chlorobenzene, was used, whereas the linear aldehydes of the Comparative Example did not allow the achievement of the advantages of the present invention. After halogenation and treatment with TiCl₄ and ethyl benzoate, the catalyst component particles come out in a narrow particle size range which carry on to polymer.

### EXAMPLE 5

The procedures of the Comparative Example were repeated except that the 16 mmol of octylaldehyde were replaced by 16 mmol of 2-ethylhexanal. The product in each case was a pale yellow solution which had the consistency of water. This Example illustrates that a mixture of aldehydes having a minor amount of the branched aldehyde can still be used to achieve the advantages of the present invention. After halogenation and treatment with TiCl₄ and ethyl benzoate, the catalyst component particles come out in a narrow particle size range which carry on to polymer.

### EXAMPLE 6

The catalyst components (procatalysts) prepared in Example 1 were used to polymerize propylene in a liquid pool polymerization (LIPP) process which was carried out for 1 hour at 67°C, in a 3.8 liters (1 U.S. gallon) autoclave, using 2.7 liters of propylene, 132 millimoles of hydrogen and sufficient catalyst component to provide 8 micromoles of titanium. Triethyl aluminum (70 mols per mole of titanium) was mixed with 17.5 millimoles of the selectivity control agent, ethyl benzoate, and either premixed with the procatalyst made in Example 1 for 5 to 30 minutes before injection or injected directly into the autoclave before procatalyst injection. The productivity of the catalyst using the procatalyst of Example 1 was 160 kg of propylene per gram of titanium and the xylene solubles were 8%.

### EXAMPLE 7

The procatalysts prepared in Example 2 were included in catalysts used to polymerize propylene in accordance with the procedure of Example 6. The productivity of the catalyst using the procatalyst of Example 2 was 500 kg of polypropylene per g of titanium at a xylene solubles of 3.7%.

## Claims

1. A process for preparing a catalyst component suitable for use in the polymerization of alpha olefins, comprising no inert support material and having a narrow particle size distribution, characterised by
1) mixing at least one alkyl or aryl magnesium compound with an aldehyde or ketone in the presence of a solvent, the aldehyde or ketone being a branched or aromatic aldehyde when only one alkyl or aryl magnesium compound is used and up to 70% of the said branched or aromatic aldehyde being optionally replaced by linear aldehydes;
2) dissolving, dispersing or suspending a halide of tetravalent titanium in the resulting solution;
3) recovering the resulting precipitate; and
4) contacting the precipitate with a halide of tetravalent titanium.

2. A process according to Claim 1 wherein the at least one magnesium compound is selected from diethyl magnesium, dibutyl magnesium, di-n.amyl magnesium, dicyclohexyl magnesium, di-isopropyl magnesium, isobutylpropyl magnesium, octylisoamyl magnesium, ethylheptyl magnesium, naphthylphenyl magnesium, cumylphenyl magnesium, diphenyl magnesium, ethylphenyl magnesium and isobutylnaphthyl magnesium.

3. A process according to Claim 1 or 2 wherein linear aldehyde selected from paraformaldehyde, acetaldehyde, propionaldehyde, butyraldehyde and valeraldehyde is used in step 1).

4. A process according to Claim 1 or 2 wherein a branched or aromatic aldehyde selected from ethylhexanal and benzaldehyde is used in step 1).

5. A process according to Claim 1 or 2 wherein a ketone selected from acetone and 2-butanone is used in step 1).

6. A process according to any one of the preceding claims wherein the halide of tetravalent titanium is titanium tetrachloride.

7. A process according to any one of the preceding claims wherein an electron donor, such as ethyl benzoate, is added to the solution in step 2).

8. A process according to any one of the preceding claims wherein a halohydrocarbon, such as chlorobenzene, is added to the solution of step 2).

9. A process for the preparation of an alpha olefin polymer characterised by producing a catalyst comprising a catalyst component according to any one of claims 1 to 8 and using it for catalytically polymerizing at least one alpha olefin.

## Patentansprüche

1. Verfahren zur Herstellung eines Katalysatorbestandteils, der zum Einsatz bei der Polymerisation von Alphaolefinen geeignet ist, umfassend nicht-inertes Trägermaterial und mit einer engen Teilchengrößenverteilung, dadurch gekennzeichnet, daß
1) mindestens eine Alkyl- oder Aryl-Magnesiumverbindung mit einem Aldehyd oder Keton in Gegenwart eines Lösungsmittels vermischt wird, wobei das Aldehyd oder Keton ein verzweigtes oder aromatisches Aldehyd ist soweit nur eine Alkyl- oder Aryl-Magnesiumverbindung eingesetzt wird und wobei bis zu 70 % des verzweigten oder aromatischen Aldehyds gegebenenfalls durch lineare Aldehyde ersetzt ist;
2) ein Halogenid vierwertigen Titans in der erhaltenen Lösung aufgelöst, dispergiert oder suspendiert wird;
3) das erhaltene Präzipitat gewonnen wird und
4) das Präzipitat mit einem Halogenid des vierwertigen Titans kontaktiert wird.

2. Verfahren nach Anspruch 1, wobei die mindestens eine Magnesium-Verbindung ausgewählt ist aus: Diethyl-Magnesium, Dibutyl-Magnesium, Di-n-amyl-Magnesium, Dicyclohexyl-Magnesium, Di-isopropyl-Magnesium, Isobutylpropyl-Magnesium, Octylisoamyl-Magnesium, Ethylheptyl-Magnesium, Naphthylphenyl-Magnesium, Cumylphenyl-Magnesium, Diphenyl-Magnesium, Ethylphenyl-Magnesium und Isobutylnaphthyl-Magnesium.

3. Verfahren nach Anspruch 1 oder 2, wobei das in Stufe 1) eingesetzte lineare Aldehyd ausgewählt ist aus: Paraformaldehyd, Acetaldehyd, Propionaldehyd, Butyraldehyd und Valeraldehyd.

4. Verfahren nach Anspruch 1 oder 2, wobei das in Stufe 1) eingesetzte verzweigte oder aromatische Aldehyd ausgewählt ist aus Ethylhexanal und Benzaldehyd.

5. Verfahren nach Anspruch 1 oder 2, wobei das in Stufe 1) eingesetzte Keton aus Aceton und 2-Butanon ausgewählt ist.

6. Verfahren nach einem der vorstehenden Ansprüche, wobei das Halogenid des vierwertigen Titans Titantetrachlorid ist.

7. Verfahren nach einem der vorstehenden Ansprüche, wobei ein Elektronendonor wie beispielsweise Ethylbenzoat der Lösung in Stufe 2) zugegeben wird.

8. Verfahren nach einem der vorstehenden Ansprüche, wobei ein Halogenkohlenwasserstoff wie beispielsweise Chlorbenzol der Lösung der Stufe 2) zugegeben wird.

9. Verfahren zur Herstellung eines Alphaolefin-Polymers, dadurch gekennzeichnet, daß ein Katalysator hergestellt wird, der einen Katalysatorbestandteil nach einem der Ansprüche 1 bis 8 aufweist, und dieser zur katalystischen Polymerisierung von mindestens einem Alphaolefin eingesetzt wird.

## Revendications

1. Procédé de préparation d'un composant catalytique approprié pour être utilisé dans la polymérisation d'alpha-oléfines, ne contenant pas de matériau inerte de support et présentant une répartition étroite des tailles de particules, caractérisé en ce que
a) on mélange au moins un composé alkyl-magnésien ou aryl-magnésien avec un aldéhyde ou une cétone, en présence d'un solvant, l'aldéhyde ou la cétone étant un aldéhyde aromatique ou à chaîne ramifiée si on n'utilise qu'un seul composé alkyl-magnésien ou aryl-magnésien, mais jusqu'à 70 % en poids de cet aldéhyde aromatique ou à chaîne ramifiée pouvant éventuellement être remplacés par des aldéhydes à chaîne linéaire ;
b) on dissout, disperse ou met en suspension, dans la solution résultante, un halogénure de titane tétravalent ;
c) on récupère le précipité résultant ; et
d) on met ce précipité en contact avec un halogénure de titane tétravalent.

2. Procédé conforme à la revendication 1, dans lequel ledit composé magnésien au nombre d'au moins un est choisi parmi le diéthyl-magnésium, le dibutyl-magnésium, le di-n-amyl-magnésium, le dicyclohexylmagnésium, le di-isopropyl-magnésium, l'isobutyl-propyl-magnésium, l'octyl-isoamyl-magnésium, l'éthyl-heptyl-magnésium, le naphtyl-phényl-magnésium, le cumyl-phényl-magnésium, le diphényl-magnésium, l'éthyl-phényl-magnésium et l'isoburyl-naphtyl-magnésium.

3. Procédé conforme à la revendication 1 ou 2, dans lequel on utilise, au cours de l'étape (a), un aldéhyde à chaîne linéaire qui est choisi parmi le paraformaldéhyde, l'acétaldéhyde, le propionaldéhyde, le butyraldéhyde et le valéraldéhyde.

4. Procédé conforme à la revendication 1 ou 2, dans lequel on utilise, au cours de l'étape (a), un aldéhyde aromatique ou à chaîne ramifiée qui est choisi parmi le benzaldéhyde et l'éthyl-hexanal.

5. Procédé conforme à la revendication 1 ou 2, dans lequel on utilise, au cours de l'étape (a), une cétone qui est choisie parmi l'acétone et la 2-butanone.

6. Procédé conforme à l'une des revendications précédentes, dans lequel l'halogénure de titane tétravalent est du tétrachlorure de titane.

7. Procédé conforme à l'une des revendications précédentes, dans lequel on ajoute à la solution, au cours de l'étape (b), un composé donneur d'électrons, comme du benzoate d'éthyle.

8. Procédé conforme à l'une des revendications précédentes, dans lequel on ajoute à la solution, au cours de l'étape (b), un hydrocarbure halogéné, comme du chlorobenzène.

9. Procédé de préparation de polymères d'alpha-oléfines, caractérisé en ce que l'on produit un catalyseur comprenant un composant catalytique, conformément à l'une des revendications 1 à 8, et en ce qu'on l'utilise pour effectuer la polymérisation catalytique d'au moins une alpha-oléfine.
